# EUROPEAN PATENT SPECIFICATION

(11) **EP 2 363 927 B1**
(45) Date of publication and mention of the grant of the patent: **09.11.2016**
(21) Application number: 11154104.1
(22) Date of filing: 11.02.2011
(51) Int. Cl.: H01S 3/067, H01S 3/094, H01S 3/0941, H01S 3/13, H01S 3/131, H01S 3/23

(54) **Laser processing apparatus**
Laserverarbeitungsvorrichtung
Appareil de traitement au laser

(30) Priority: 02.03.2010 JP 2010045650
(43) Date of publication of application: 07.09.2011
(73) Proprietor: Omron Corporation, Kyoto Kyoto 600-8530 (JP)
(72) Inventor: Ogaki, Tatsuo, Kyoto Kyoto 600-8530 (JP)
(74) Representative: Horn Kleimann Waitzhofer Patentanwälte PartG mbB

(56) References cited:
- EP-A2- 1 330 055
- JP-A- 3 242 627
- JP-A- 2000 340 872
- JP-A- 2004 337 970
- JP-A- 2009 066 625
- US-A1- 2004 257 643
- US-A1- 2007 064 306

## Description

### BACKGROUND OF THE INVENTION

### TECHNICAL FIELD

The present invention relates to a laser processing apparatus, and in particular, to the control of laser light emitted from a laser processing apparatus including a fiber amplifier.

### RELATED ART

For the MOPA (Master Oscillator and Power Amplifier) system, which utilizes a fiber amplifier, it has been proposed to make the excitation energy supplied to a fiber amplifier during a non-emitting time period different from the energy supplied to the fiber amplifier during an emitting time period.

For example, Japanese Unexamined Patent Publication No. 2000-340872 (Patent Document 1) discloses a laser marking apparatus including a first excitation semiconductor laser that is continuously driven and a second excitation semiconductor laser that is pulse-driven. The power of the continuous light emitted from the first excitation semiconductor laser is lower than the power of the pulsed light emitted from the second excitation semiconductor laser. Whereas the optical amplifying fiber is excited only by the excitation light from the first excitation semiconductor laser during a non-emitting time period during which the signal semiconductor laser does not generate signal light, the optical amplifying fiber is excited by the excitation light beams from the first and second excitation semiconductor lasers during an emitting time period during which the signal semiconductor laser generates signal light. The above excitation method is aimed at preventing the problems that the energy of the output pulse immediately after the start of light emission is excessively increased and that, conversely, it takes time for the power of the output pulse to reach a predetermined value.

In addition, Japanese Unexamined Patent Publication No. 03-242627 (Patent Document 2), for example, discloses a multistage optical amplifying apparatus for optical communications. With this apparatus, an excitation light source is pulse-driven in synchronization with signal light (seed light). Such a driving system is aimed at reducing ASE (Amplified Spontaneous Emission).

In addition, Japanese Unexamined Patent Publication No. 2004-337970 (Patent Document 3) discloses an apparatus as defined in the preamble of claim 1.
Patent Document 1: Japanese Unexamined Patent Publication No. 2000-340872
Patent Document 2: Japanese Unexamined Patent Publication No. 03-242627
Patent Document 3: Japanese Unexamined Patent Publication No. 2004-337970

With the configuration disclosed in Patent Document 1, if the power of the continuous light emitted from the first excitation semiconductor laser is not appropriate, then there is the possibility that the energy of the output pulse immediately after the start of light emission becomes excessively large, or that it takes time for the energy of the output pulse to reach predetermined power. If the energy of the output pulse immediately after the start of light emission is not stable, then the quality of the laser processing (including, but not limited to, printing) is deteriorated. Such a problem tends to occur, for example, when conditions such as the repetition frequency, power, or the like of the output pulse are changed with a change in the laser processing condition.

Likewise, with the configuration disclosed in Patent Document 2, the excitation energy supplied to the optical amplifying fiber is consumed by the signal light. However, not all the excitation energy can be consumed by the signal light, and therefore a part of the excitation energy remains in the optical fiber. The unconsumed excitation energy is gradually released from the optical amplifying fiber as ASE. If the interval between the excitation light pulses varies, also the excitation energy remaining in the optical amplifying fiber upon emission of the excitation light pulses varies. Accordingly, the excitation energy that is reached during the excitation time period varies depending on the interval between the excitation light pulses. The output power changes as the excitation energy changes.

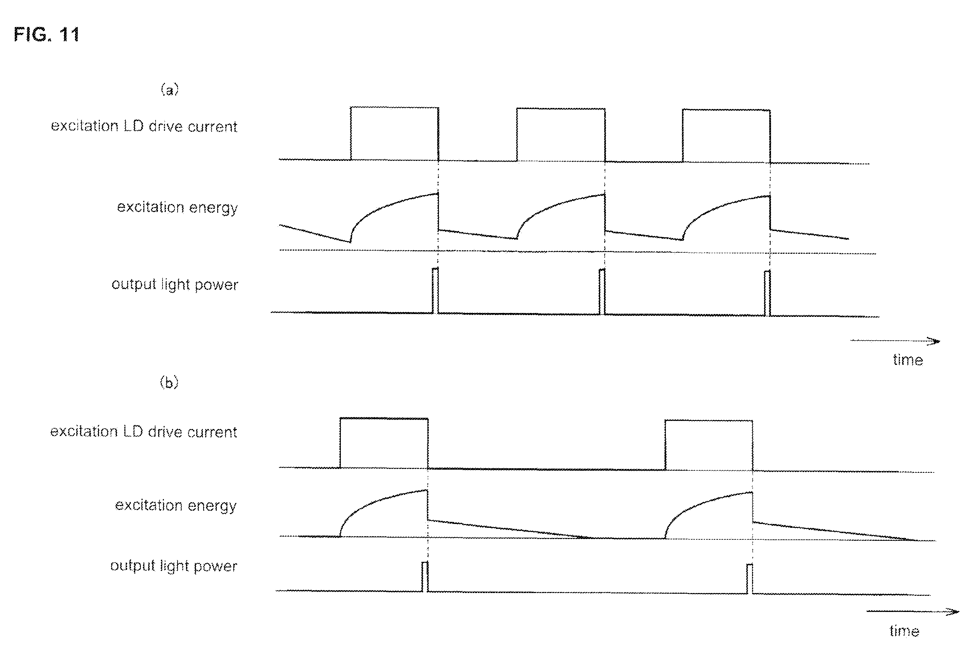

FIGS. 11 are diagrams illustrating problems that could occur in the case of using the optical amplifications disclosed in Patent Documents 1 and 2. FIG. 11 (a) is a diagram showing of the power of output pulsed light when the repetition time period of the output pulsed light is short. FIG. 11 (b) is a diagram showing the power of output pulsed light when the repetition time period of the output pulsed light is long.

Referring to FIGS. 11, an excitation laser generates excitation light using a drive current supplied to the excitation laser. As a result of the excitation light entering an optical amplifying fiber, excitation energy is supplied to the optical amplifying fiber. The time during which the excitation energy is accumulated in the optical amplifying fiber is the excitation time of the optical amplifying fiber, and this excitation time corresponds to the time during which the drive current is supplied to the excitation laser.

The excitation energy accumulated in the optical amplifying fiber is consumed as a result of the signal light being input into the optical amplifying fiber. Since the drive current of the excitation laser is turned off in synchronization with the generation of the signal light, the supply of the excitation energy to the optical amplifying fiber is also stopped in synchronization with the generation of the signal light. Since ASE light is released from the optical amplifying fiber, the excitation energy accumulated in the optical amplifying fiber is gradually decreased while the supply of the excitation energy is being stopped.

The longer the time period during which the supply of the excitation energy is stopped, the smaller the excitation energy remaining in the optical amplifying fiber at the time of the start of excitation becomes. As can be understood from a comparison between FIG. 11 (a) and FIG. 11 (b), the longer the repetition cycle period of the pulsed light, the smaller the excitation energy remaining in the optical amplifying fiber at the time of the start of excitation becomes.

If the excitation conditions (specifically, the magnitude of the drive current of the excitation laser, the time period during which the drive current is supplied, and so forth) are the same even though the repetition time period varies, the power of the output light changes. The shorter the repetition time period, the larger the power of the output light becomes, and, the longer the repetition time period, the smaller the power of the output light becomes. Accordingly, for example, if laser light is output in synchronization with a trigger signal that is input from the outside into the laser processing apparatus in an irregular manner, then it is difficult to maintain the power of that output light at a predetermined value.

Furthermore, in general, the function of measuring the output is not added to a semiconductor laser used as an excitation laser. For this reason, the excitation semiconductor laser is driven at a constant current. However, since the threshold of the excitation semiconductor laser (start-oscillation current value) changes with the ambient temperature or with aging, the power of the excitation light that is output from the excitation semiconductor laser may change even if the excitation semiconductor laser is driven at a constant current. Changes in the power of the excitation light lead to changes in the processing quality of the laser processing apparatus. In other words, there is the possibility that the processing quality of the laser processing apparatus may change with the ambient temperature or with the aging of the excitation semiconductor laser.

### SUMMARY

It is an object of the present invention to provide a technology for stabilizing the power of pulsed light that is output from a laser processing apparatus.

In summary, the present invention provides a laser processing apparatus that outputs laser light used for processing an object to be processed, and the apparatus includes an optical amplifying fiber that amplifies seed light using excitation light, a seed light source that generates seed light in a pulsed manner, an excitation light source that generates excitation light, a storage unit that stores control conditions for the excitation light, and a control unit that controls the excitation light source in accordance with the control conditions stored in the storage unit. The control conditions include a predetermined condition for causing the excitation light source to generate excitation light having an energy that is substantially equal to an energy released from the optical amplifying fiber, during a non-emitting time period during which the seed light is not generated.

The invention is specifically defined by the appended claims.

Preferably, the seed light source is a laser light source that generates a pulse train including a plurality of light pulses as the seed light. The non-emitting time period is the time between the pulse trains in the case where the seed light source repeatedly generates the pulse train.

Preferably, the power of the excitation light during the non-emitting time period is smaller than the power of the excitation light during an emitting time period during which the pulse train is generated.

Preferably, the excitation light source continuously generates the excitation light during the non-emitting time period.

Preferably, the excitation light source periodically generates the excitation light during the non-emitting time period.

Preferably, the excitation light source generates the excitation light after temporarily stopping the generation of the excitation light during the non-emitting time period.

Preferably, the time interval between the plurality of light pulses is shorter than the time interval between the pulse trains. Preferably, the seed light source is a laser light source that repeatedly generates a light pulse as the seed light. The non-emitting time period is the time between the light pulses.

Preferably, the excitation light source increases the power of the excitation light prior to the generation of the seed light, and decreases the power of the excitation light in synchronization with the generation of the seed light.

Preferably, the predetermined condition defines the power and the excitation time of the excitation light in accordance with the relationship of the power and the excitation time of the excitation light with the power of the laser light. This makes it possible to provide open-loop control of the power of the laser light in accordance with the predetermined condition. It is also possible to provide closed-loop control using the predetermined condition as the target value.

Preferably, the laser processing apparatus further includes a detector for detecting the excitation light that has been output from the optical amplifying fiber, and a correction unit that corrects the control conditions stored in the storage unit. The correction unit reflects a detection result obtained by the detector in the correction of the control conditions.

Preferably, the laser processing apparatus further includes a detector for detecting the intensity of light that has been output from the optical amplifying fiber, and a correction unit that corrects the control conditions stored in the storage unit. The correction unit reflects a detection result obtained by the detector in the correction of the control conditions.

With the present invention, it is possible to stabilize the power of processing pulsed light that is output from a laser processing apparatus.

### BRIEF DESCRIPTION OF THE DRAWINGS

FIG. 1 is a diagram showing an example of the configuration of a laser processing apparatus according to Embodiment 1 of the present invention.
FIGS. 2 show examples of the structure of an optical amplifying fiber as shown in FIG. 1.
FIG. 3 is a functional block diagram of a control apparatus as shown in FIG. 1.
FIG. 4 is a diagram illustrating an operation of a seed LD and an excitation LD according to Embodiment 1.
FIGS. 5 are diagrams illustrating an operation of a seed LD and an excitation LD according to Embodiment 2.
FIG. 6 is a diagram illustrating an operation of a seed LD and an excitation LD according to Embodiment 3.
FIG. 7 is a diagram illustrating an operation of a seed LD and an excitation LD according to Embodiment 4.
FIG. 8 is a diagram showing an overall configuration of a laser processing apparatus according to Embodiment 5.
FIGS. 9 show waveform examples of pulses detected by a peak value detector as shown in FIG. 8.
FIG. 10 is a functional block diagram of a control apparatus as shown in FIG. 8.
FIGS. 11 are diagrams illustrating problems that could occur in the case of using the optical amplifications disclosed in Patent Documents 1 and 2.
FIGS. 12 are waveform charts showing the power of pulsed light that is actually output from the laser processing apparatus according to Embodiment 1.

### DETAILED DESCRIPTION

Hereinafter, embodiments of the present invention will be described in detail with reference to the drawings. In the drawings, identical or equivalent components are designated by identical numerals, and the overlapping description is omitted.

As used herein, the term "pulse train" means a plurality of light pulses arranged at a given time interval along a time axis. As used herein, the term "LD" represents a semiconductor laser.

### [Embodiment 1]

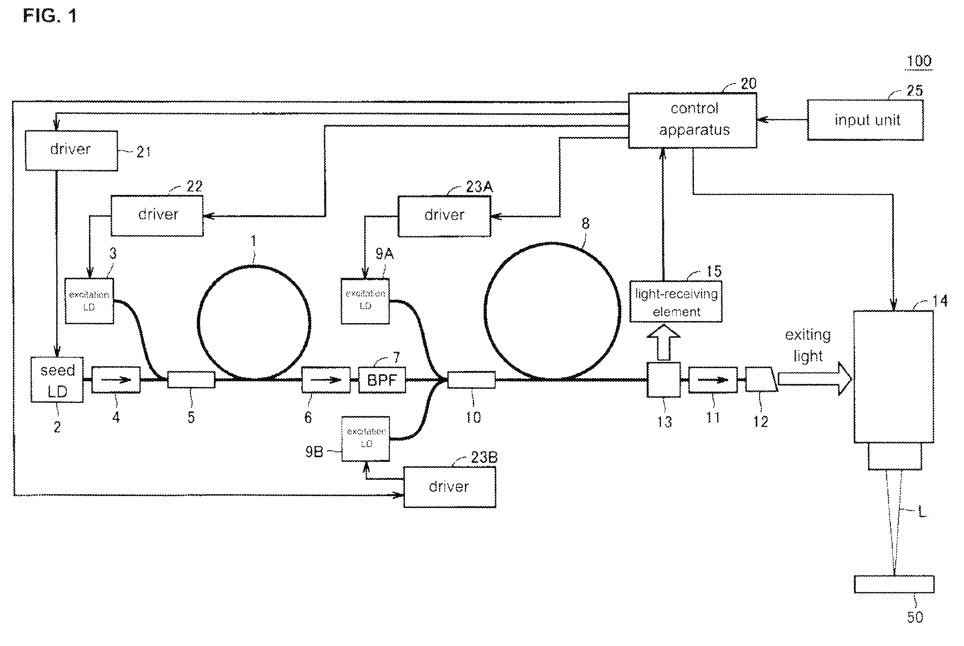

FIG. 1 is a diagram showing an example of the configuration of a laser processing apparatus according to Embodiment 1 of the present invention. Referring to FIG. 1, a laser processing apparatus 100 includes a two-stage amplification laser amplifier. More specifically, the laser processing apparatus 100 includes optical fibers 1 and 8, a seed LD 2, excitation LDs 3, 9A, and 9B, isolators 4, 6, and 11, a bandpass filter (BPF) 7, combiners 5 and 10, an end cap 12, and drivers 21, 22, 23A, and 23B. A two-stage amplification laser amplifier is formed by these elements. The laser processing apparatus 100 further includes a pump dump 13, a light-receiving element 15, a laser beam scanning mechanism 14, a control apparatus 20, and an input unit 25.

The optical fibers 1 and 8 are optical amplifying fibers, and each include a core to which a rare-earth element serving as an optical amplifying component is added, and a cladding provided around the core. The type of the rare-earth element added to the core is not particularly limited, and examples thereof include Er (erbium), Yb (ytterbium), and Nd (neodymium). In the following, the rare-earth element is described as being Yb.

Each of the optical fibers 1 and 8 may be, for example, a single-clad fiber in which a single layer of a cladding is provided around a core, or may be a double-clad fiber in which two layers of a cladding are provided around a core. Further, the optical fibers 1 and 8 may be optical fibers having the same structure (for example, single-clad fibers), or may be a combination of optical fibers having different structures (for example, a single-clad fiber and a double-clad fiber).

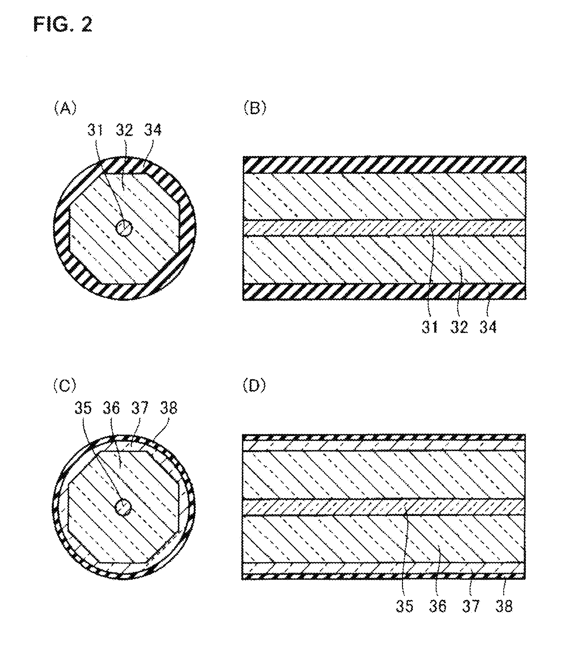

FIGS. 2 show examples of the structure of an optical amplifying fiber as shown in FIG. 1. FIGS. 2(A) and 2(B) are cross-sectional views of an example of a single-clad fiber, showing cross sections, respectively, perpendicular and parallel to the direction of extension of fiber. Referring to FIGS. 2(A) and 2(B), the single-clad fiber includes a core 31 to which a rare-earth element is added, and a cladding 32 that is provided around the core 31 and that has a lower refractive index than that of the core 31. The outer surface of the cladding 32 is covered by an outer skin 34.

FIGS. 2(C) and 2(D) are cross-sectional views of an example of a double-clad fiber, showing cross sections, respectively, perpendicular and parallel to the direction of extension of fiber. Referring to FIGS. 2(C) and 2(D), the double-clad fiber includes a core 35 to which a rare-earth element is added, a first cladding 36 that is provided around the core 35 and that has a lower refractive index than that of the core 35, and a second cladding 37 that is provided around the first cladding 36 and that has a lower refractive index than that of the first cladding 36. The outer surface of the second cladding 37 is covered by an outer skin 38.

Referring back to FIG. 1, the seed LD 2 is a laser light source that emits seed light. The wavelength of the seed light is a wavelength selected from the range of 1000 to 1100 nm, for example. The driver 21 pulse-drives the seed LD 2 by repeatedly applying a pulsed current to the seed LD 2. That is, pulsed seed light is emitted from the seed LD 2.

The seed light emitted from the seed LD 2 passes through the isolator 4. The isolator 4 realizes the function of allowing light to pass through only in one direction and intercepting light entering in the opposite direction. In embodiments of the present invention, the isolator 4 allows the passage of the seed light from the seed LD 2, and intercepts light returning from the optical fiber 1. This can prevent the light returning from the optical fiber 1 from entering the seed LD 2. Although there is the possibility that the seed LD 2 may be damaged if the light returning from the optical fiber 1 enters the seed LD 2, such a problem can be avoided by providing the isolator 4.

The excitation LD 3 is an excitation light source that emits excitation light for exciting the atoms of the rare-earth element added to the core of the optical fiber 1. In the case where the rare-earth element is Yb, the wavelength of the excitation light is 940±10 nm, for example. The driver 22 drives the excitation LD 3.

The combiner 5 combines the seed light from the seed LD 2 with the excitation light from the excitation LD 3, and causes them to enter the optical fiber 1.

The excitation light that has entered the optical fiber 1 is absorbed by the atoms of the rare-earth element contained in the core, and thereby the atoms are excited. When the seed light from the seed LD 2 propagates through the core of the optical fiber 1, the excited atoms undergo stimulated emission due to the seed light, and thereby the seed light is amplified. That is, the optical fiber 1 amplifies the seed light using the excitation light.

If the optical fiber 1 is a single-clad fiber, both the seed light and the excitation light enter the core. By contrast, if the optical fiber 1 is a double-clad fiber, the seed light enters the core and the excitation light enters the first cladding. The first cladding of the double-clad fiber acts as the waveguide of the excitation light. In the process in which the excitation light that has entered the first cladding propagates through the first cladding, the rare-earth element contained in the core is excited by the mode passing through the core.

The isolator 6 allows the passage of the seed light (light pulse) that has been amplified by the optical fiber 1 and has been emitted from the optical fiber 1, and intercepts the light returning to the optical fiber 1.

The bandpass filter 7 allows the passage of the light of a wavelength range including the peak wavelength of the light pulse that is output from the optical fiber 1, and removes any light of a wavelength range different from that wavelength range.

The excitation LDs 9A and 9B emit excitation light for exciting the atoms of the rare-earth element contained in the core of the optical fiber 8. The drivers 23A and 23B drive the excitation LDs 9A and 9B, respectively.

For the configuration shown in FIG. 1, the number of the excitation LDs in the first stage is one and the number of the excitation LDs in the second stage is two, but the number of the excitation LDs is not limited thereto.

The combiner 10 combines the light pulse that has passed through the bandpass filter 7 with the excitation light from the excitation LDs 9A and 9B, and causes them to enter the optical fiber 8. The light pulse that has entered the optical fiber 8 is amplified by the excitation light by the same effect as the optical amplifying effect in the optical fiber 1.

In addition to emitting the amplified light pulse, the optical fiber 8 releases the remaining excitation energy that has not been used for the optical amplification. The pump dump 13 separates the excitation light from the light emitted from the optical fiber 8. Note that the means for separating the excitation light from the output light is not limited to the pump dump 13, and may be an element having different transmittances (reflectances) depending on the wavelength, such as a dichroic mirror. The light-receiving element 15 receives the excitation light that has been separated from the output light, and outputs a signal indicating the intensity of that excitation light. That is, the pump dump 13 and the light-receiving element 15 are used for measuring the excitation light that has been output from the fiber amplifier in the second stage.

The isolator 11 allows the passage of the light pulse from the pump dump 13, and intercepts the light returning to the optical fiber 8. The light pulse that has passed through the isolator 11 is emitted from the end face of the optical fiber following the isolator 11 into the atmosphere. The end cap 12 is provided for preventing damage that could be caused at the interface between the end face of the optical fiber and the atmosphere when a light pulse having a high peak power is emitted from the optical fiber into the atmosphere.

The laser beam scanning mechanism 14 is used for two-dimensionally scanning the exiting light from the laser amplifier. Although not shown, the laser beam scanning mechanism 14 may include, for example, a collimator lens for adjusting the diameter of a laser beam, which is the exiting light from the end cap 12, to a predetermined size, a galvano scanner for two-dimensionally scanning the surface of a workpiece 50 with the laser beam that has passed through the collimator lens, an fθ lens for collecting the laser beam, and so forth. As a result of laser light L, that is, the output light from the laser processing apparatus 100, scanning over the surface of the workpiece 50, the surface of the workpiece 50 made of a material such as metal is processed. For example, information including text, graphics, and the like can be printed (marked) on the surface of the workpiece 50.

The control apparatus 20 performs the overall control of the operation of the laser processing apparatus 100 by controlling the drivers 21, 22, 23A, and 23B, and the laser beam scanning mechanism 14. The input unit 25 receives information (for example, information indicating the characters, symbols, or the like that are to be printed on the surface of the workpiece 50) from a user, and transmits the received information to the control apparatus 20. The control apparatus 20 controls the start and the end of the operation of the drivers 21, 22, 23A, and 23B, for example, based on the information from the input unit 25, and controls the operation of the laser beam scanning mechanism 14 while the drivers 21, 22, 23A, and 23B are being operated (or in other words, while light is being emitted from the laser amplifier).

The control apparatus 20 may be implemented, for example, by a personal computer executing a predetermined program. There is no particular limitation on the input unit 25, as long as it is an apparatus through which the user can input information, and it is possible to use, for example, a mouse, a keyboard, or a touch panel.

The characteristics of the seed LD, the excitation LDs, the isolators, the bandpass filter, and so forth may change depending on the temperature. Therefore, it is preferable that the laser processing apparatus is provided with a temperature controller for keeping the temperatures of these elements constant.

In the case where laser light is output from the laser processing apparatus 100, the seed LD 2 generates pulsed seed light by being driven by the driver 21. In the case where the seed light is repeatedly generated from the seed LD 2, the repetition frequency of the seed light is dependent on the repetition frequency of the pulsed current supplied from the driver 21 to the seed LD 2. The repetition frequency of the pulsed current that is output from the driver 21 is controlled by the control apparatus 20.

The control apparatus 20 varies the power of the excitation light emitted by the excitation LDs 3, 9A, and 9B by controlling the drivers 22, 23A, and 23B. The excitation LDs 3, 9A, and 9B output excitation light having a power corresponding to the drive currents supplied respectively from the drivers 22, 23A, and 23B. The magnitude of the drive current that is output from each of the drivers 22, 23A, and 23B is controlled by the control apparatus 20.

In the case where the laser processing apparatus 100 repeatedly generates an output light pulse, the excitation LDs 3, 9A, and 9B generate excitation light not only during the emitting time period during which the seed light pulse is generated, but also during the non-emitting time period during which the seed light pulse is not generated. The control apparatus 20 controls the drivers 22, 23A, and 23B so that the excitation light power in the non-emitting time period can be varied based on the conditions relating to the output light from the laser processing apparatus 100.

Specifically, the control apparatus 20 controls the excitation light power (or in other words, the drive currents supplied from the drivers to the excitation LDs) during the non-emitting time period based on conditions relating to the output light. These conditions include at least a condition relating to the power of the output light. Controlling the excitation light power during the non-emitting time period makes it possible to stabilize the power of the output light in a manner described below.

In this embodiment, the excitation light power during the non-emitting time period is smaller than the excitation light power during the emitting time period. In the non-emitting time period, the control apparatus 20 attenuates the drivers 22, 23A, and 23B so that the drive currents supplied from the drivers 22, 23A, and 23B to the excitation LDs are decreased.

Control conditions for the drivers 22, 23A, and 23B for the excitation LDs have been previously stored in the control apparatus 20, and the control apparatus 20 controls the drivers 22, 23A, and 23B in accordance with the conditions. These control conditions are determined by a preliminary test, and the control apparatus 20 stores the data relating to the control conditions.

The control apparatus 20 corrects the control conditions based on the previously stored data, on the basis of the power of the excitation light detected by the light-receiving element 15. That is, the control apparatus 20 performs feedback control relating to the power of the excitation light during the non-emitting time period. This feedback control enables further stabilization of the power of the output light from the laser processing apparatus.

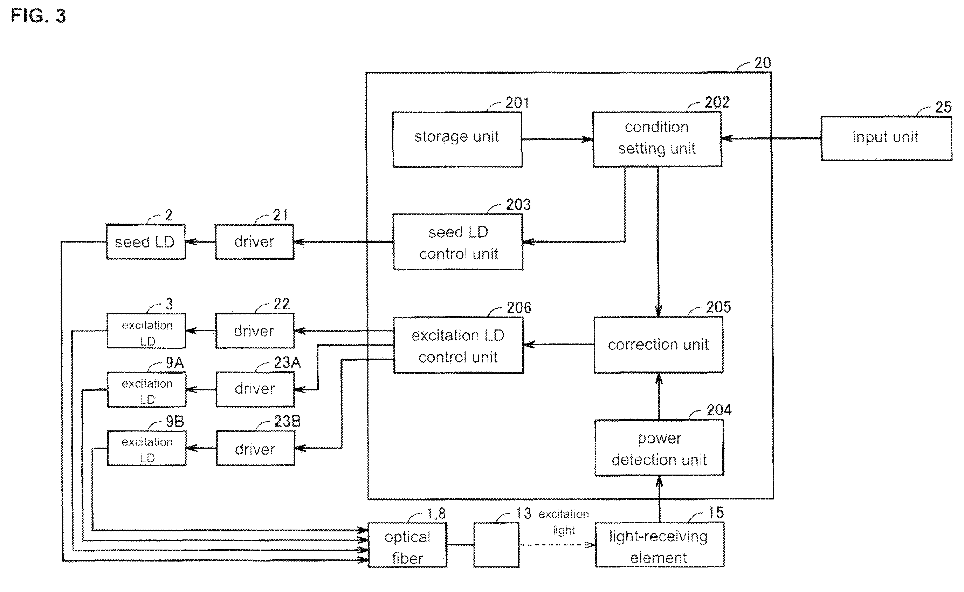

FIG. 3 is a functional block diagram of the control apparatus shown in FIG. 1. Referring to FIG. 3, the control apparatus 20 includes a storage unit 201, a condition setting unit 202, a seed LD control unit 203, a power detection unit 204, a correction unit 205, and an excitation LD control unit 206. The configuration shown in FIG. 3 may be implemented by hardware (an electronic circuit), or may be implemented by software.

The storage unit 201 stores the conditions relating to the seed light and the excitation light in association with the conditions for the output light from the laser processing apparatus (hereinafter, also simply referred to as "output light"). Examples of this stored content include the relationship of the excitation light power and the excitation time relative to the output light power, and the relationship of the pulse width of the seed light relative to the pulse width of the output light. These relationships are stored in the storage unit 201 in any of various forms such as tables, functions, and maps.

The condition setting unit 202 sets the drive conditions for the seed LD and the excitation LDs based on the information that has been input into the input unit 25 and the conditions stored in the storage unit 201. For example, the peak power of the light that is output from the laser processing apparatus is input into the input unit 25. The condition setting unit 202 sets the excitation light power and the excitation time in accordance with the peak power, the relationship of the excitation light power and the excitation time stored in the storage unit 201 with the output light power. Further, for example, the repetition frequency of light that is output from the laser processing apparatus is input into the input unit 25. The condition setting unit 202 sets the repetition frequency of the seed light pulse in accordance with that repetition frequency.

Note that the above description shows an example of the information stored in the storage unit 201 and the conditions set by the condition setting unit 202. The condition setting unit 202 may be configured to set the initial drive conditions for the seed LD and the excitation LDs based on the information that is input via the input unit 25 and the information stored in the storage unit 201.

The seed LD control unit 203 controls the driver 21 for driving the seed LD 2 based on the conditions set by the condition setting unit 202. The driver 21 supplies a drive current to the seed LD 2 under the control of the seed LD control unit 203.

The power detection unit 204 detects, out of the light that has been output from the optical fibers 1 and 8, the power of the excitation light that has been separated by the pump dump 13, based on a signal from the light-receiving element 15. The light-receiving element 15 receives the excitation light from the pump dump 13, and outputs a signal indicating the intensity of that excitation light. The power detection unit 204 detects the power of the excitation light that has been separated by the pump dump 13, based on the intensity of the signal from the light-receiving element 15.

The correction unit 205 corrects the drive conditions for the excitation LDs set by the condition setting unit 202. Specifically, the correction unit 205 corrects the condition relating to the power of the excitation light emitted from the excitation LDs 3, 9A, and 9B in the non-emitting time period by reflecting a detection result obtained by the power detection unit 204 in the drive conditions for the excitation LDs that are stored in the storage unit 201.

The excitation LD control unit 206 controls the driver 22 for driving the excitation LD 3, the driver 23A for driving the excitation LD 9A, and the driver 23B for driving the excitation LD 9B, in accordance with the condition that has been set by the condition setting unit 202 and has been corrected by the correction unit 205. Each of the drivers 22, 23A, and 23B supplies the drive current to the corresponding excitation LD under the control of the excitation LD control unit 206.

In embodiments of the present invention, the drivers 22, 23A, and 23B are collectively controlled (for example, the drive currents change equally). Accordingly, in the description in each of the embodiments, the excitation LDs 3, 9A, and 9B are described collectively as a single excitation LD. Likewise, in the following description, the excitation energies that are accumulated in the optical fibers 1 and 8 as a result of the excitation light entering these optical fibers are also described collectively as the excitation energy accumulated in a single optical fiber.

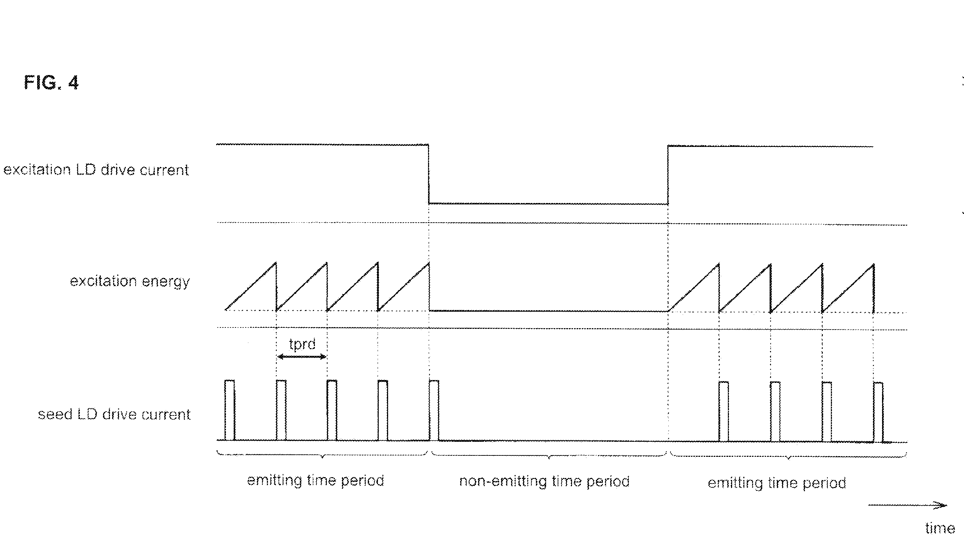

FIG. 4 is a diagram illustrating an operation of a seed LD and an excitation LD according to Embodiment 1. Referring to FIG. 4, the seed LD repeatedly generates a seed light pulse at a cycle period tprd. In Embodiment 1, an emitting time period is a time period during which a pulse train including a predetermined number of two or more seed light pulses is generated, and a non-emitting time period is a time period during which the pulse train is not generated. Note that the time interval between the plurality of pulses in the pulse train, that is, the cycle period tprd, is shorter than the non-emitting time period.

The excitation light that is output from the excitation LD is continuous light. The excitation light power is dependent on the drive current supplied to the excitation LD. That is, as shown in FIG. 4, the change of the excitation light power corresponds to the change of the drive current supplied to the excitation LD.

The seed light pulse is amplified by gaining excitation energy within the optical amplifying fiber, and eventually becomes output light that is output from the laser processing apparatus. In the process in which the seed light is amplified, not all the excitation energy is consumed by the amplification of the seed light, and a part of the excitation energy remains in the optical amplifying fiber. During the emitting time period, the excitation light (CW light) enters the optical amplifying fiber, and therefore the excitation energy supplied by the excitation light is added to the excitation energy remaining in the optical amplifying fiber. As a result of amplification of seed light that is subsequently generated, the excitation energy is consumed, with a part of it remaining in the optical amplifying fiber. While the seed light pulse is being generated, the consumption and the addition of the excitation energy are repeated in the optical amplifying fiber.

The excitation energy that has not been used for the amplification of the seed light pulse and thus remains in the optical amplifying fiber is released as ASE light. In Embodiment 1, excitation energy (excitation light power) that is equivalent to the energy released from the optical amplifying fiber is continuously supplied from the excitation LDs during the non-emitting time period.

If more energy is supplied to the optical amplifying fiber during the non-emitting time period than is released from the optical amplifying fiber, then the excitation energy accumulated in the optical amplifying fiber increases during the non-emitting time period. Consequently, the power of the pulsed light that is output from the laser processing apparatus at the start of light emission becomes larger.

Conversely, if less energy is supplied to the optical amplifying fiber during the non-emitting time period than is released from the optical amplifying fiber, then the excitation energy accumulated in the optical amplifying fiber decreases during the non-emitting time period. Consequently, the power of the pulsed light that is output from the laser processing apparatus at the start of light emission becomes smaller, and it takes time for the power of the output light to reach a predetermined level.

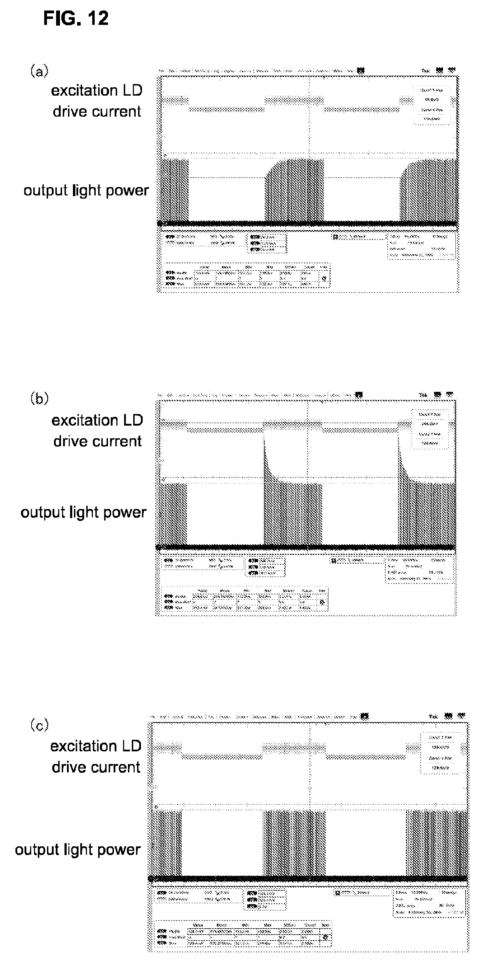

FIGS. 12 are waveform charts showing the power of pulsed light that is actually output from the laser processing apparatus according to Embodiment 1. As shown in FIG. 12(a), if the excitation LD drive current value is too small during the non-emitting time period, then the power of the output pulsed light at the start of light emission becomes smaller and it takes time for that the power of the pulsed light to reach a predetermined level. Conversely, as shown in FIG. 12(b), if the excitation LD drive current value during the non-emitting time period is too large, then the power of the output pulsed light at the start of light emission becomes larger. By setting the excitation LD drive current value during the non-emitting time period to an appropriate value, it is possible to stabilize the power of the output pulsed light from the start of light emission as shown in FIG. 12(c).

According to Embodiment 1, an excitation energy (excitation light power) that is equivalent to the energy released from the optical amplifying fiber is continuously supplied from the excitation LDs during the non-emitting time period. This makes it possible to stabilize the excitation energy accumulated in the optical amplifying fiber during the non-emitting time period, regardless of the length of that non-emitting time period. Accordingly, the power of the output light at the start of the next emitting time period can be made the same as the power of the output light during the previous emitting time period.

According to Embodiment 1, the power of the output light can be stabilized even if the length of the non-emitting time period changes. This enables high quality processing.

Furthermore, in Embodiment 1, the conditions relating to the excitation light that is output from the excitation LDs during the non-emitting time period may be controlled based on the power of the excitation light that has been detected by the light-receiving element 15. Specifically, excitation light that has been released from the optical fiber 8 is detected by the light-receiving element 15, and the excitation light power is controlled based on the power of the excitation light received by the light-receiving element 15. Such a feedback control enables further stabilization of the power of output light that is output from the laser processing apparatus.

### [Embodiment 2]

Embodiment 2 is different from Embodiment 1 in the control of the excitation light power. Specifically, in Embodiment 2, modulated excitation in which the excitation LDs are synchronized with the seed light pulse is performed.

Note that the overall configuration of a laser processing apparatus according to Embodiment 2 is the same as the configuration shown in FIG. 1. Furthermore, the configuration of the control apparatus 20 is the same as the configuration shown in FIG. 3. Therefore, a detailed description of the configuration of the laser processing apparatus according to Embodiment 2 is omitted in the following.

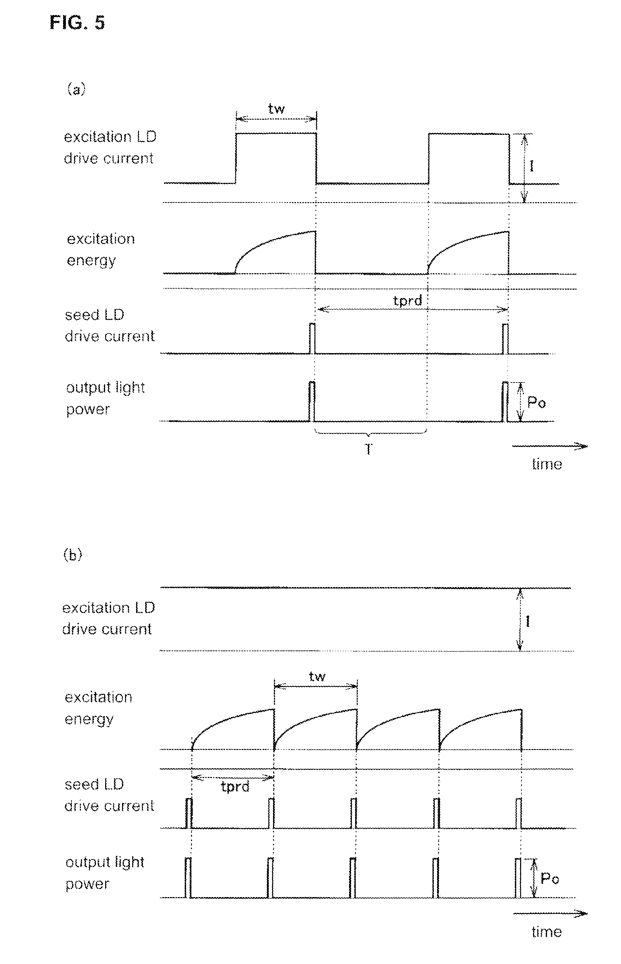

FIGS. 5 are diagrams illustrating an operation of a seed LD and an excitation LD according to Embodiment 2. FIG. 5(a) is a diagram illustrating modulated excitation. FIG. 5(b) is a diagram illustrating CW excitation.

Referring to FIG. 5(a), in modulated excitation, the drive current supplied to the excitation LDs is modulated in synchronization with the timing with which the seed light is generated from the seed LD. In the case where the repetition frequency of the seed light is low (for example, up to approximately 10 kHz), such an excitation method is effective in stabilizing the output light power. In the example in FIG. 5(a), the excitation time width tw is shorter than the cycle period tprd at which the seed light pulse is generated. In this example, an emitting time period is a time period during which the seed light pulse is generated, and a non-emitting time period is a time period during which the seed light pulse is not generated.

A time period T is a time period that is included in the non-emitting time period and during which the excitation energy released from the optical amplifying fiber as ASE light and the energy of excitation light that is supplied to the optical amplifying fiber as a result of the excitation light entering from the excitation LDs are made the same. By keeping the excitation energy accumulated in the optical amplifying fiber substantially constant during the time period T, the output light power can be stabilized even if the cycle period tprd changes.

Referring to FIG. 5(b), in the case of the CW excitation, on the other hand, the excitation LDs are driven at a constant current. The excitation time width tw corresponds to the shortest possible repetition cycle period tprd for keeping the output light power constant in the case of CW excitation. That is, the CW excitation can be considered as an excitation method in which the time period T is substantially 0 in the modulated excitation shown in FIG. 5(a).

In Embodiment 2, the seed light is repeatedly generated, with the excitation time width tw and the drive current value I of the excitation LDs being fixed. In Embodiment 2 as well, the excitation time width tw, the drive current value, and the like of the excitation LDs are set so that the excitation energy remaining in the optical amplifying fiber immediately after emission of output light from the laser processing apparatus does not change, based on the conditions relating to the output light.

In the case of the modulated excitation, it is possible to stabilize the power of the output pulsed light regardless of the cycle period tprd. Accordingly, it is possible to stabilize the power of output light even in the case where the time interval at which the output light is emitted varies, including, for example, the case where the laser processing apparatus emits output light in synchronization with an external input signal.

Furthermore, according to Embodiment 2, it is possible to switch the excitation method from the modulated excitation to the CW excitation by shortening the cycle period tprd. In the case of the CW excitation as well, it is possible to stabilize the power of output light. According to Embodiment 2, it is possible to obtain output light having substantially the same power Po regardless of the excitation method, and therefore it is possible to stabilize the processing quality.

### [Embodiment 3]

Embodiment 3 is different from Embodiment 1 in the method of controlling the excitation light power during the non-emitting time period. However, in Embodiment 3 as well, the excitation light power during the non-emitting time period is controlled so that the excitation energy accumulated in the optical amplifying fiber is stabilized during the non-emitting time period.

The overall configuration of a laser processing apparatus according to Embodiment 3 is the same as the configuration shown in FIG. 1. Furthermore, the configuration of the control apparatus 20 is the same as the configuration shown in FIG. 3. Therefore, a detailed description of the configuration of the laser processing apparatus according to Embodiment 3 is omitted in the following.

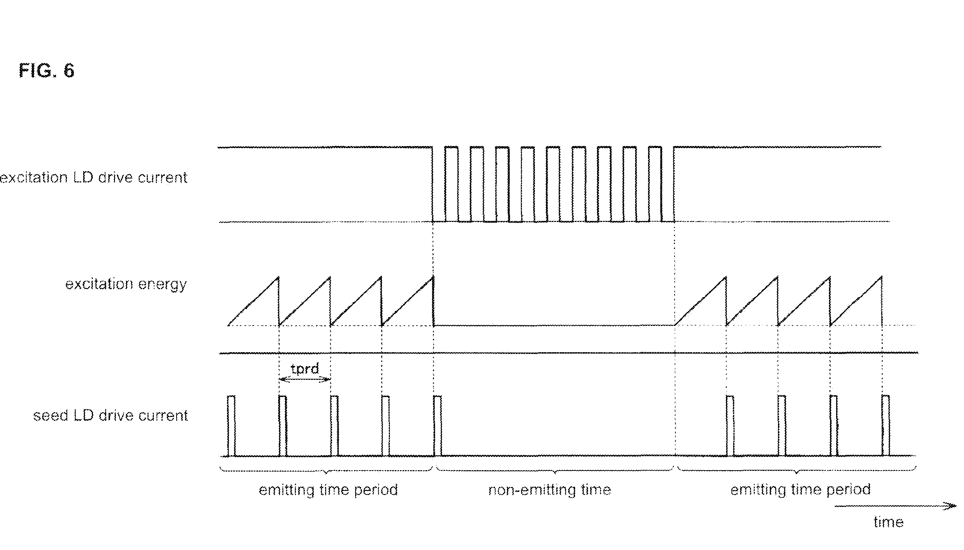

FIG. 6 is a diagram illustrating an operation of a seed LD and an excitation LD according to Embodiment 3. Referring to FIGS. 6 and 4, in Embodiment 3, the excitation LDs are pulse-driven during the non-emitting time period. In this respect, Embodiment 3 is different from Embodiment 1. The average value of the excitation light power during the non-emitting time period is the same between Embodiment 3 and Embodiment 1. Therefore, according to Embodiment 3, it is possible to stabilize the excitation energy accumulated in the optical amplifying fiber regardless of the length of the non-emitting time period, as with Embodiment 1. That is, at the start of the next emitting time period, the power of output light can be made the same as the power in the previous emitting time period.

The duty ratio of the drive current pulse of the excitation LDs during the non-emitting time period has been previously stored in the storage unit 201 of the control apparatus 20. Based on the value stored in the storage unit 201, the excitation LD control unit 206 controls the drivers 22, 23A, and 23B (see FIG. 3). Further, the correction unit 205 may correct the duty ratio of the drive current pulse in accordance with the intensity of excitation light detected by the light-receiving element 15. In this case, it is possible to further stabilize the excitation energy accumulated in the optical amplifying fiber during the non-emitting time period, and therefore it is possible to further stabilize the power of output light.

### [Embodiment 4]

In Embodiment 4, basically, the seed LD and the excitation LDs are driven in the same manner as in Embodiment 1. However, the non-emitting time period is longer than that in Embodiment 1. Embodiment 4 is different from Embodiment 1 in the control of the excitation LDs during the non-emitting time period.

The overall configuration of a laser processing apparatus according to Embodiment 4 is the same as the configuration shown in FIG. 1. Furthermore, the configuration of the control apparatus 20 is the same as the configuration shown in FIG. 3. Therefore, a detailed description of the configuration of the laser processing apparatus according to Embodiment 4 is omitted in the following.

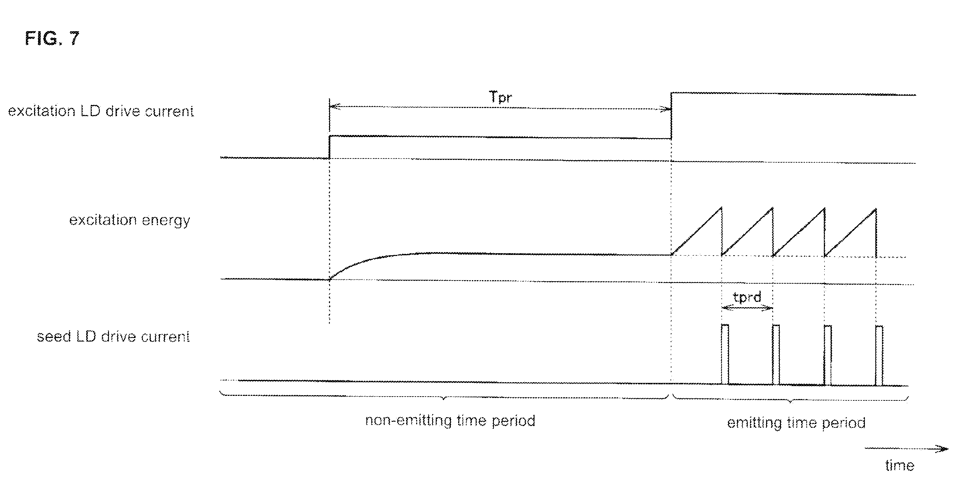

FIG. 7 is a diagram illustrating an operation of a seed LD and an excitation LD according to Embodiment 4. Referring to FIG. 7, a time period during which the supply of the drive current to the excitation LDs is stopped is provided in the case where the non-emitting time period is long. Tpr represents the time required for the excitation energy accumulated in the optical amplifying fiber to reach the level of the excitation energy that the optical amplifying fiber should retain. This level corresponds to the excitation energy remaining in the optical amplifying fiber after the amplification of the seed light performed by the optical amplifying fiber during the emitting time period.

In Embodiment 4, the driving of the excitation LDs is started a time period Tpr earlier than the time at which the first pulse of a seed light pulse train is generated. Upon start of the emitting time period, an output light pulse having predetermined power can be generated. In the case where the non-emitting time period is long, providing the time period during which the supply of the drive current to the excitation LDs is stopped can achieve, for example, the effect of reducing the power consumption of the laser processing apparatus.

### [Embodiment 5]

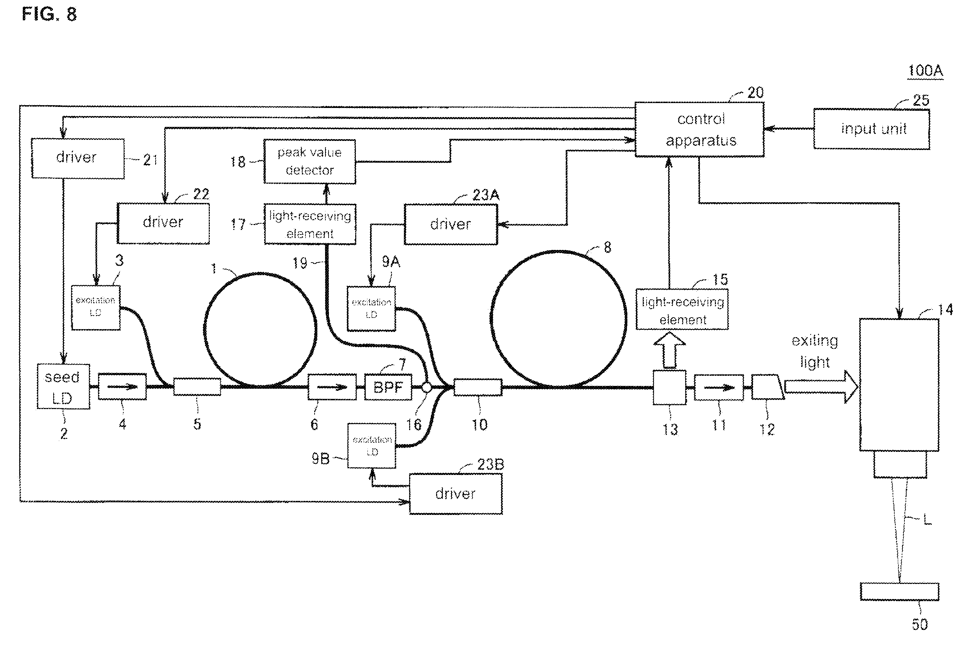

FIG. 8 is a diagram showing an overall configuration of a laser processing apparatus according to Embodiment 5. Referring to FIGS. 8 and 1, a laser processing apparatus 100A is different from the laser processing apparatus 100 in that it further includes a coupler 16, a light-receiving element 17, and a peak value detector 18.

The coupler 16 branches the power of pulsed light that is output from the laser amplifier in the first stage through the bandpass filter 7. Due to the coupler 16, a part of the pulsed light energy that has been output from the bandpass filter 7 becomes light that is input into the light-receiving element 17. The light-receiving element 17 receives light through the optical fiber 19 from the coupler 16, and outputs a signal whose intensity changes with the power of that light.

The peak value detector 18 detects the peak value of the output signal from the light-receiving element 17, and transmits the detection result to the control apparatus 20. The peak value detector 18 may include, for example, a sampling circuit, an A/D converter, an amplifier, and so forth, but there is no particular limitation on the configuration of the peak value detector 18.

The control apparatus 20 determines the difference between the peak value of the first pulse in the emitting time period and the pulse peak value in a steady state in which the pulse power is stable, using the pulse peak value detected by the peak value detector 18. Then, the control apparatus 20 performs feedback control of the excitation light power by controlling the excitation light power during the non-emitting time period so that the peak value difference becomes 0. This makes it possible to stabilize the power of output light that is output from the laser processing apparatus.

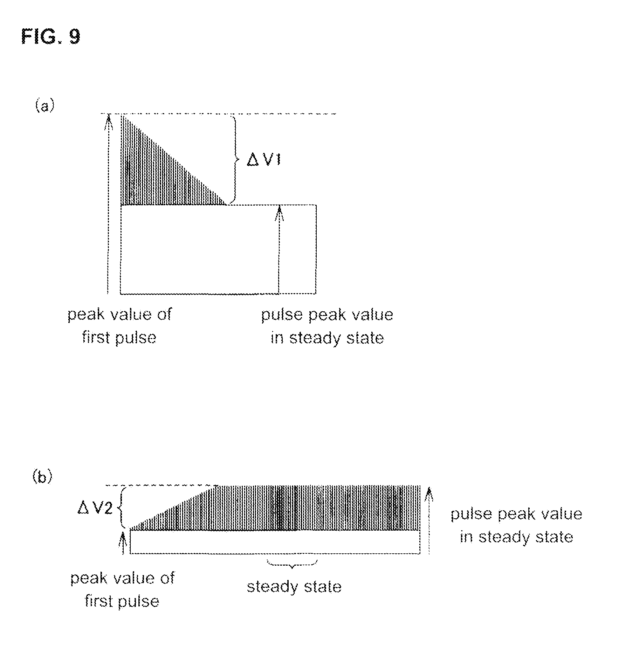

FIGS. 9 show waveform examples of pulses detected by a peak value detector as shown in FIG. 8. FIG. 9(a) is a waveform chart showing a state in which the peak value of the first pulse in the emitting time period is higher than the peak value of the pulse in the steady state. In this case, the control apparatus 20 decreases the excitation light power so that the peak value difference ΔV1 becomes 0. Specifically, the control apparatus 20 controls the driver 22 so that the drive current supplied to the excitation LD 3 by the driver 22 during the non-emitting time period becomes smaller.

FIG. 9(b) is a waveform chart showing a state in which the peak value of the first pulse in the emitting time period is lower than the peak value of the pulse in the steady state. In this case as well, the control apparatus 20 decreases the excitation light power so that the peak value difference ΔV2 becomes 0. Specifically, the control apparatus 20 controls the driver 22 so that the drive current supplied to the excitation LD 3 by the driver 22 during the non-emitting time period becomes larger.

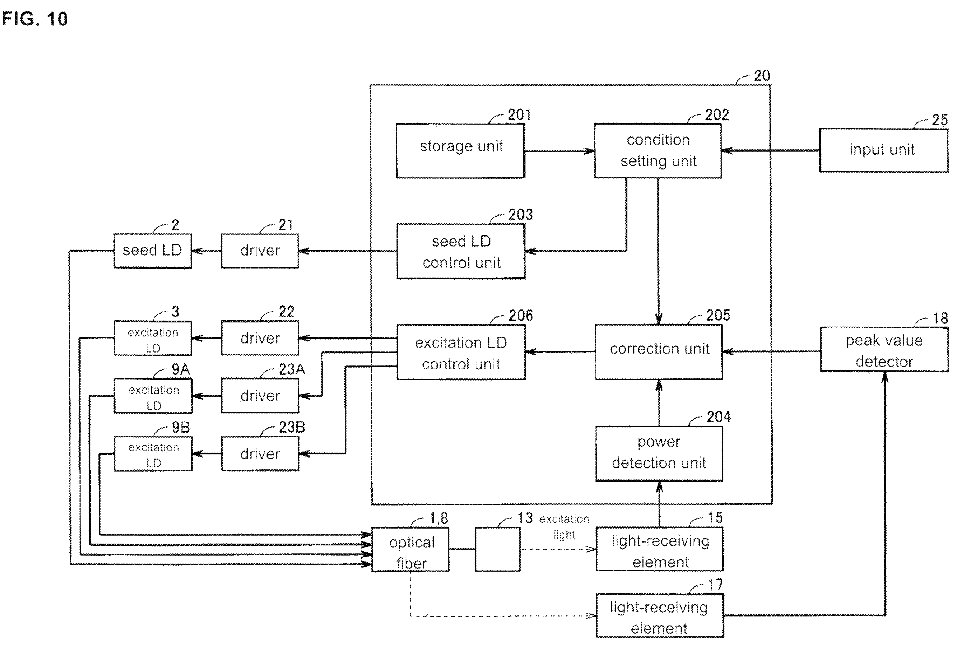

FIG. 10 is a functional block diagram of a control apparatus as shown in FIG. 8. Referring to FIGS. 10 and 3, in Embodiment 5, the correction unit 205 receives a pulse peak value detected by the peak value detector 18, and reflects the pulse peak value, which is the detection result obtained by the peak value detector 18, in the correction of the drive conditions for the excitation LDs that are stored in the storage unit 201. Specifically, the correction unit 205 calculates the difference between the peak value of the first pulse in the emitting time period and the peak value in the steady state, and corrects the condition relating to the excitation light power during the non-emitting time period so that the difference becomes 0. The excitation LD control unit 206 controls the drivers 22, 23A, and 23B in accordance with the condition corrected by the correction unit 205.

With the configuration shown in FIG. 8, the peak value detector 18 detects a peak value of the pulsed light that is output from the laser amplifier in the first stage. The correction unit 205 changes the control conditions for the driver 22 based on the detection result obtained by the peak value detector 18.

In the case of a laser processing apparatus including a plurality of stages of laser amplifiers, the detector for detecting the power of pulsed light can be installed in any of the plurality of stages. Accordingly, in the configuration shown FIG. 8, the light-receiving element 17 and the peak value detector 18 may be arranged so that the power of pulsed light that is output from the fiber amplifier in the second stage is detected.

According to Embodiment 5, it is possible to stabilize the power of pulses included in the pulse train constituting output light, as with Embodiment 1. In the case where there is a change in environment such as temperature, there is the possibility that the excitation light power may change even though the current supplied to the excitation LDs remains unchanged. According to Embodiment 5, the power of pulsed light that is output from the fiber amplifier is detected, and feedback control of the excitation light power during the non-emitting time period is performed based on that detection result. This makes it possible to stabilize the power of output light even in the case where there is a change in environment such as temperature.

The disclosed embodiments are illustrated only by way of example, and the invention is not limited to the embodiments. The scope of the invention is expressed by not the above description, but claims of the invention. It is intended that the invention includes the meaning equivalent to claims of the invention and all changes within the scope of the invention.

### REFERENCE NUMERALS

- 1, 8, 19: optical fiber
- 2: seed LED
- 3, 9A, 9B: excitation LD
- 4, 6, 11: isolator
- 5, 10: combiner
- 7: bandpass filter
- 12: end cap
- 13: pump dump
- 14: laser beam scanning mechanism
- 15, 17: light-receiving element
- 16: coupler
- 18: peak value detector
- 20: control apparatus
- 21, 22, 23A, 23B: driver
- 25: input unit
- 31, 35: core
- 32: cladding
- 34, 38: outer skin
- 36: first cladding
- 37: second cladding
- 50: workpiece
- 100, 100A: laser processing apparatus
- 201: storage unit
- 202: condition setting unit
- 203: seed LD control unit
- 204: power detection unit
- 205: correction unit
- 206: excitation LD control unit

## Claims

1. A laser processing apparatus (100, 100A) adapted to output laser light used for processing an object to be processed, the apparatus comprising:
a seed light source (2) adapted to generate seed light in a pulsed manner;
an excitation light source (3, 9A, 9B) adapted to generate excitation light;
an optical amplifying fiber (1, 8) adapted to guide the seed light and the excitation light, to amplify the seed light using the excitation light, and to release the excitation light that is not used for amplification;
a storage unit (201), in which control conditions for the excitation light are stored;
a control unit (206) adapted to control the excitation light source (9, 9A, 9B) in accordance with the control conditions stored in the storage unit (201),
a detector (18) adapted to detect the excitation light that has been output from the optical amplifying fiber (1, 8); and
a correction unit (205) adapted to correct the control conditions stored in the storage unit (201) and to reflect a detection result obtained by the detector (18) in the correction of the control conditions,
**characterized in that** the control conditions comprise a predetermined condition for causing the excitation light source (9, 9A, 9B) to generate excitation light having an energy that is substantially equal to an energy released as amplified spontaneous emission light from the optical amplifying fiber (1, 8), during a non-emitting time period during which the seed light is not generated.

2. The laser processing apparatus (100, 100A) according to claim 1,
wherein the seed light source (2) is a laser light source adapted to generate a pulse train including a plurality of light pulses as the seed light,
the seed light source (2) is adapted to generate the pulse train repeatedly; and the non-emitting time period is the time between the pulse trains.

3. The laser processing apparatus (100, 100A) according to claim 1 or 2, wherein the control conditions for the excitation light are such that the power of the excitation light during the non-emitting time period is smaller than the power of the excitation light during an emitting time period during which the pulse train is generated.

4. The laser processing apparatus (100, 100A) according to any of claims 1 to 3, wherein the excitation light source (9, 9A, 9B) is adapted to continuously generate the excitation light during the non-emitting time period.

5. The laser processing apparatus (100, 100A) according to any of claims 1 to 3, wherein the excitation light source (9, 9A, 9B) is adapted to periodically generate the excitation light during the non-emitting time period.

6. The laser processing apparatus (100, 100A) according to any of claims 1 to 5, wherein the excitation light source (9, 9A, 9B) is adapted to generate the excitation light after temporarily stopping the generation of the excitation light during the non-emitting time period.

7. The laser processing apparatus (100, 100A) according to any one of claims 2 to 6, wherein the seed light source (2) is adapted to generate the pulse trains such that the time interval between the plurality of light pulses of the pulse train is shorter than the time interval between the pulse trains.

8. The laser processing apparatus (100, 100A) according to any of claims 1 to 7,
wherein the seed light source (2) is a laser light source that is adapted to repeatedly generate a light pulse as the seed light, and
the non-emitting time period is the time between the light pulses.

9. The laser processing apparatus (100, 100A) according to any of claims 1 to 8, wherein the excitation light source (9, 9A, 9B) is adapted to increase the power of the excitation light prior to the generation of the seed light, and to decrease the power of the excitation light in synchronization with the generation of the seed light.

10. The laser processing apparatus (100, 100A) according to any of claims 1 to 9, wherein the predetermined condition defines the power and the excitation time of the excitation light in accordance with the relationship of the power and the excitation time of the excitation light with the power of the laser light.

11. A method for generating laser light used for processing an object to be processed, with a laser processing apparatus (100, 100A) according to any of claims 1 to 10, the method comprising:
generating seed light in a pulsed manner;
generating excitation light;
guiding the seed light and the excitation light through an optical amplifying fiber (1, 8), amplifying the seed light using the excitation light, and releasing the excitation light that is not used for amplification;
**characterized in that** the generated excitation light has an energy that is substantially equal to an energy released from the optical amplifying fiber (1, 8), during a non-emitting time period during which the seed light is not generated.

12. The method according to claim 11, wherein the laser processing apparatus (100, 100A) is a laser processing apparatus according to any of claims 1 to 10.

## Patentansprüche

1. Laserverarbeitungsvorrichtung (100, 100A), die eingerichtet ist, Laserlicht zum Bearbeiten eines Objektes auszugeben, wobei die Vorrichtung Folgendes aufweist:
eine Seedlichtquelle (2), die eingerichtet ist, pulsierendes Seedlicht zu erzeugen;
eine Anregungslichtquelle (9A, 9B), die eingerichtet ist, Anregungslicht zu erzeugen;
eine optisch verstärkende Faser (1, 8), die eingerichtet ist, das Seedlicht und das Anregungslicht zu führen, das Seedlicht mit dem Anregungslicht zu verstärken, und das nicht für die Verstärkung verwendete Anregungslicht abzugeben;
eine Speichereinheit (201), in welcher Steuerbedingungen für das Anregungslicht gespeichert sind;
eine Steuereinheit (206), die eingerichtet ist, die Anregungslichtquelle (9, 9A, 9B) in Übereinstimmung mit den in der Speichereinheit (201) gespeicherten Steuerbedingungen zu steuern;
einen Detektor (18), der eingerichtet ist, das Anregungslicht zu erfassen, das von der optisch verstärkenden Faser (1, 8) ausgegeben wird; und
eine Korrektureinheit (205), die eingerichtet ist, die in der Speichereinheit (201) gespeicherten Steuerbedingungen zu korrigieren und ein mit dem Detektor (18) erhaltenes Erfassungsergebnis in der Korrektur der Steuerbedingungen wiederzuspiegeln;
**dadurch gekennzeichnet, dass** die Steuerbedingungen eine bestimmte Bedingung umfassen, um die Anregungslichtquelle (9, 9A, 9B) Anregungslicht mit einer Energie erzeugen zu lassen, die im Wesentlich gleich der während der nicht-emittierenden Zeitdauer während welcher kein Seedlicht erzeugt wird von der optisch verstärkenden Faser (1, 8) als verstärktes spontanes Emissionslicht abgegebenen Energie ist.

2. Laserverarbeitungsvorrichtung (100, 100A) gemäß Anspruch 1,
wobei die Seedlichtquelle (2) eine Laserlichtquelle ist, die eingerichtet ist, eine Pulsfolge zu erzeugen, die mehrere Lichtpulse als Seedlicht umfasst;
die Seedlichtquelle (2) eingerichtet ist, die Pulsfolge mehrmals hintereinander zu erzeugen; und
die nicht-emittierende Zeitdauer die Zeit zwischen den Pulsfolgen ist.

3. Laserverarbeitungsvorrichtung (100, 100A) gemäß Anspruch 1 oder 2, wobei die Steuerbedingungen für das Anregungslicht derart sind, dass die Leistung des Anregungslichts während der nicht-emittierenden Zeitdauer kleiner ist als die Leistung des Anregungslichts während einer emittierenden Zeitdauer während derer die Pulsfolge erzeugt wird.

4. Laserverarbeitungsvorrichtung (100, 100A) gemäß einem der Ansprüche 1 bis 3, wobei die Anregungslichtquelle (9, 9A, 9B) eingerichtet ist, das Anregungslicht während der nicht-emittierenden Zeitdauer kontinuierlich zu erzeugen.

5. Laserverarbeitungsvorrichtung (100, 100A) gemäß einem der Ansprüche 1 bis 3, wobei die Anregungslichtquelle (9, 9A, 9B) eingerichtet ist, das Anregungslicht während der nicht-emittierenden Zeitdauer periodisch zu erzeugen.

6. Laserverarbeitungsvorrichtung (100, 100A) gemäß einem der Ansprüche 1 bis 5, wobei die Anregungslichtquelle (9, 9A, 9B) eingerichtet ist, das Anregungslicht nach dem vorübergehenden Anhalten der Erzeugung des Anregungslichts während der nicht-emittierenden Zeitdauer zu erzeugen.

7. Laserverarbeitungsvorrichtung (100, 100A) gemäß einem der Ansprüche 2 bis 6, wobei die Seedlichtquelle (2) eingerichtet ist, die Pulsfolgen so zu erzeugen, dass das zeitliche Abstand zwischen den Lichtpulsen der Pulsfolgen kleiner ist als der zeitliche Abstand zwischen den Pulsfolgen

8. Laserverarbeitungsvorrichtung (100, 100A) gemäß einem der Ansprüche 1 bis 7,
wobei die Seedlichtquelle (2) eine Laserlichtquelle ist, die eingerichtet ist, wiederholt einen Lichtpuls als Seedlicht zu erzeugen; und
die nicht-emittierende Zeitdauer die Zeit zwischen den Lichtpulsen ist.

9. Laserverarbeitungsvorrichtung (100, 100A) gemäß einem der Ansprüche 1 bis 8,
wobei die Anregungslichtquelle (9, 9A, 9B) eingerichtet ist, die Leistung des Anregungslichts vor dem Erzeugen des Seedlichts zu erhöhen, und die Leistung des Anregungslichts synchron mit dem Erzeugen des Seedlichts zu verringern.

10. Laserverarbeitungsvorrichtung (100, 100A) gemäß einem der Ansprüche 1 bis 9,
wobei die bestimmte Bedingung die Leistung und die Anregungszeit des Anregungslichts gemäß der Beziehung zwischen der Leistung und der Anregungszeit des Anregungslichts mit der Leistung des Laserlichts definiert.

11. Verfahren zum Erzeugen von Laserlicht zum Verarbeiten eines Objekts mit einer Laserverarbeitungsvorrichtung (100, 100A) gemäß einem der Ansprüche 1 bis 10, wobei das Verfahren Folgendes aufweist:
Erzeugen von pulsierendem Seedlicht;
Erzeugen von Anregungslicht;
Führen des Seedlichts und des Anregungslichts durch eine optisch verstärkende Faser (1, 8), Verstärken des Seedlichts mit dem Anregungslicht, und Abgeben des Anregungslicht, das nicht für die Verstärkung verwendet wird;
**dadurch gekennzeichnet, dass** das erzeugte Anregungslicht eine Energie aufweist, die im Wesentlich gleich der während der nicht-emittierenden Zeitdauer während welcher kein Seedlicht erzeugt wird von der optisch verstärkenden Faser (1, 8) als verstärktes spontanes Emissionslicht abgegebenen Energie ist.

12. Verfahren gemäß Anspruch 11, wobei die Laserverarbeitungsvorrichtung (100, 100A) eine Laserverarbeitungsvorrichtung (100, 100A) gemäß einem der Ansprüche 1 bis 10 ist.

## Revendications

1. Appareil de traitement au laser (100, 100A) conçu pour émettre une lumière laser utilisée pour traiter un objet à traiter, l'appareil comprenant:
une source de lumière d'amorçage (2) conçue pour générer une lumière d'amorçage de manière pulsée;
une source de lumière d'excitation (3, 9A, 9B) conçue pour générer une lumière d'excitation;
une fibre optique amplificatrice (1, 8) conçue pour guider la lumière d'amorçage et la lumière d'excitation, amplifier la lumière d'amorçage en utilisant la lumière d'excitation, et relâcher la lumière d'excitation qui n'est pas utilisée pour l'amplification;
une unité de stockage (201), dans laquelle sont stockées des conditions de commande pour la lumière d'excitation;
une unité de commande (206) conçue pour commander la source de lumière d'excitation (9, 9A, 9B) en accord avec les conditions de commande stockées dans l'unité de stockage (201);
un détecteur (18) conçu pour détecter la lumière d'excitation qui a été émise par la fibre optique amplificatrice (1, 8); et
une unité de correction (205) conçue pour corriger les conditions de commande stockées dans l'unité de stockage (201) et refléter un résultat de détection obtenu par le détecteur (18) lors de la correction des conditions de commande, **caractérisé en ce que** les conditions de commande contiennent une condition prédéterminée causant la source de lumière d'excitation (9, 9A, 9B) à générer une lumière d'excitation ayant une énergie sensiblement égale à une énergie relâchée comme lumière spontanée amplifiée émise par la fibre optique amplificatrice (1, 8), pendant une période de temps de non-émission pendant laquelle la lumière d'amorçage n'est pas générée.

2. Appareil de traitement au laser (100, 100A) selon la revendication 1,
dans lequel la source de lumière d'amorçage (2) est une source de lumière laser conçue pour générer, comme lumière d'amorçage, un train d'impulsions comprenant une pluralité d'impulsions de lumière,
la source de lumière d'amorçage (2) est conçue pour générer le train d'impulsions de façon répétée; et
la période de temps de non-émission est la durée entre plusieurs trains d'impulsions.

3. Appareil de traitement au laser (100, 100A) selon l'une des revendications 1 ou 2, dans lequel les conditions de commande pour la lumière d'excitation sont telles que la puissance de la lumière d'excitation pendant la période de temps de non-émission est plus petite que la puissance de la lumière d'excitation pendant une période de temps d'émission, durant laquelle le train d'émission est généré.

4. Appareil de traitement au laser (100, 100A) selon l'une des revendications 1 à 3, dans lequel la source de lumière d'excitation (9, 9A, 9B) est conçue pour continuellement générer la lumière d'excitation durant la période de temps de non-émission.

5. Appareil de traitement au laser (100, 100A) selon l'une des revendications 1 à 3, dans lequel la source de lumière d'excitation (9, 9A, 9B) est conçue pour périodiquement générer la lumière d'excitation durant la période de temps de non-émission.

6. Appareil de traitement au laser (100, 100A) selon l'une des revendications 1 à 5, dans lequel la source de lumière d'excitation (9, 9A, 9B) est conçue pour générer la lumière d'excitation après avoir temporairement arrêté la génération de la lumière d'excitation durant la période de temps de non-émission.

7. Appareil de traitement au laser (100, 100A) selon l'une des revendications 2 à 6, dans lequel la source de lumière d'amorçage (2) est conçue pour générer les trains d'impulsions tels que l'intervalle de temps entre la pluralité d'impulsions de lumière du train d'impulsions est plus court que l'intervalle de temps entre les trains d'impulsions.

8. Appareil de traitement au laser (100, 100A) selon l'une des revendications 1 à 7,
dans lequel la source de lumière d'amorçage (2) est une source de lumière laser conçue pour générer de façon répétitive, comme lumière d'amorçage, une impulsion de lumière, et
la période de temps de non-émission est la durée entre les impulsions de lumière.

9. Appareil de traitement au laser (100, 100A) selon l'une des revendications 1 à 8, dans lequel la source de lumière d'excitation (9, 9A, 9B) est conçue pour augmenter la puissance de la lumière d'excitation avant la génération de la lumière d'amorçage, et pour diminuer la puissance de la lumière d'excitation en synchronisation avec la génération de la lumière d'amorçage.

10. Appareil de traitement au laser (100, 100A) selon l'une des revendications 1 à 9, dans lequel la condition prédéterminée définit la puissance et le temps d'excitation de la lumière d'excitation en accord avec la relation reliant la puissance et le temps d'excitation de la lumière d'excitation avec la puissance de la lumière laser.

11. Procédé pour générer une lumière laser utilisée pour traiter un objet à traiter, avec un appareil de traitement au laser (100, 100A) selon l'une des revendications 1 à 10, le procédé comprenant:
une génération d'une lumière d'amorçage de manière pulsée;
une génération d'une lumière d'excitation;
un guidage de la lumière d'amorçage et de la lumière d'excitation à travers une fibre optique amplificatrice (1, 8), une amplification de la lumière d'amorçage en utilisant la lumière d'excitation, et un relâchement de la lumière d'excitation qui n'est pas utilisée pour l'amplification;
**caractérisé en ce que** la lumière d'excitation générée a une énergie sensiblement égale à une énergie relâchée par la fibre optique d'amplification (1, 8), pendant une période de temps de non-émission pendant laquelle la lumière d'amorçage n'est pas générée.

12. Procédé selon la revendication 11, dans lequel l'appareil de traitement au laser (100, 100A) est un appareil de traitement au laser (100, 100A) selon l'une des revendications 1 à 10.
